# EUROPEAN PATENT SPECIFICATION

(11) **EP 4 012 474 B1**
(45) Date of publication and mention of the grant of the patent: **10.07.2024**
(21) Application number: 21193605.9
(22) Date of filing: 27.08.2021
(51) Int. Cl.: G02B 19/00, F21S 4/28, F21V 5/04, F21V 7/00

(54) **LENS AND LAMP WITH LENS THEREOF**
LINSE UND LAMPE MIT LINSE DAFÜR
LENTILLE ET LAMPE LA COMPRENANT

(30) Priority: 11.12.2020 CN 202011447057
(43) Date of publication of application: 15.06.2022
(73) Proprietor: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: HE, Zuping, Ningbo, 315103 (CN); ZENG, Guoqing, Ningbo, 315103 (CN); LIU, Xiaoyun, Ningbo, 315103 (CN); XU, Kai, Ningbo, 315103 (CN); YANG, Jun, Ningbo, 315103 (CN)
(74) Representative: 2K Patentanwälte Blasberg Kewitz & Reichel

(56) References cited:
- EP-A1- 2 708 804
- EP-A1- 3 037 719
- CN-A- 110 529 823
- US-A1- 2011 261 570
- US-A1- 2013 250 573
- US-A1- 2019 011 086

## Description

### FIELD OF THE INVENTION

The present invention relates to the field of lighting techniques, in particular to a lens and a lamp comprising such a lens.

### BACKGROUND

With the popularity of LED lamps, there are more and more occasions to start using LED lamps, such as bedroom, kitchen, living room and other home lighting applications and commercial lighting applications, such as in freezers, cold chains, shelves and the like.

An LED chip can be used as a point-like light source with a certain (fixed) light intensity distribution, but for practical use, focus or uniform illumination over a large area is required. Therefore, in the prior art, optical elements are generally disposed in the LED chip light direction for secondary light distribution, so as to achieve the required light intensity distribution.

With the development of lighting technology, new requirements have also been put forward. In indoor lighting, especially in products such as freezers and shelves, which are often located in corner locations, efficient single-side large-area lighting is required, and miniaturization of the volume is also required. At present, the existing lamps cannot meet the needs.

US 2019/011086 A1 discloses a lens-shaped light flux control member, and a light-emitting device comprising the same. A portion of the light from the light emitted by a light-emitting element enters the entrance region, then, is reflected by the first reflective surface on the same side as this entrance region with respect to the optical axis serving as a boundary, and is caused to exit from the second reflective surface on this same side. Another portion of the light enters the entrance region, is reflected by the second reflective surface and the third reflective surface, in this order, on the same side as this entrance region with respect to the optical axis serving as the boundary, is then caused to exit from the connection surface on this same side, re-enters from the first reflective surface or the connection surface on the opposite side with respect to the optical axis, and is then caused to exit from the second reflective surface on this opposite side.

EP 3 037 719 A1 discloses a lens body with a light entry surface arranged centrally in a cross section and two further light entry surfaces arranged laterally thereof, wherein the light entry surfaces are arranged in such a way that a first partial light beam from at least one LED arranged centrally above the lens body enters the central light entry surface and two further partial light beams from the same LED enter in each case one of the lateral light entry surfaces, and a centrally arranged light output coupling surface, through which the first partial light beam leaves the lens body in the direction of the main radiation direction of the LED. The two further partial light beams are in each case totally reflected at at least one boundary surface of the lens body and leave the lens body through in each case one further light output coupling surface counter to the main radiation direction of the LED, as well as a luminaire with such a lens body.

### SUMMARY OF INVENTION

It is an object of the present invention to provide a lens and a lamp with such a lens, wherein the lens is configured to realize uniform lighting in a large area on one side, and has small volume and high light efficiency.

This problem is solved by a lens as claimed by claim 1, and by a lamp as claimed by claim 11. Further advantageous embodiments are the subject-matter of the dependent claims.

A lens according to the present invention comprises: a light source setting portion with a main optical axis, a longitudinal axis and a horizontal axis passing through its center and perpendicular to each other; said lens being divided into a first side portion and second side portion, in a plane where the main optical axis and the horizontal axis are located, which are disposed on opposite sides of the main optical axis, wherein the first side portion is configured to deflect light from a light source disposed at the light source setting portion and having a maximum light intensity direction that coincides with the main optical axis in a direction away from the second side portion and such that a reverse extension line of the maximum light intensity direction of the first beam after deflection by the first side portion intersects the main optical axis. According to the present invention the second side portion comprises: a first light inlet surface; a first connecting surface, which is connected to an outer end of the first light inlet surface; a first total reflection surface, being inclined relative outwardly relative to the main optical axis in a direction extending away from the horizontal axis, if viewed in the plane where the main optical axis and the horizontal axis are located, said first total reflection surface being configured for total reflection of incident light from the first light inlet surface outwardly; a second total reflection surface, being inclined outwardly relative to the main optical axis in a direction extending away from the horizontal axis, if viewed in the plane where the main optical axis and the horizontal axis are located, a first end of said second total reflection surface being connected with a free end of the first connecting surface, said second total reflection surface being configured for receiving and reflecting the reflected light from the first total reflection surface; a third total reflection surface, being inclined inwardly relative to the main optical axis in a direction extending away from the horizontal axis, if viewed in the plane where the main optical axis and the horizontal axis are located, one end of the third total reflection surface being connected with a second end of the second total reflection surface opposite to the first end of the second total reflection surface, said third total reflection surface being configured for total reflection of the reflected light from the second total reflection surface; and a first light outlet surface, being connected to the free end of the first total reflection surface and the third total reflection surface, and being configured for emitting the reflected light from the third total reflection surface; wherein the second light beam emitted from the first light outlet surface has a maximum light intensity direction intersecting with the main optical axis.

### Technical effects of the present invention

The lens of the present invention and the lamp with the lens realizes uniform lighting in a large area on one side, and has small volume and high light efficiency.

### BRIEF DESCRIPTION OF THE DRAWINGS

Exemplary embodiments of the present invention will be described below with reference to the drawings, in which:
- FIG. 1: is a three-dimensional structure diagram of the lens of the present embodiment;
- FIG.2: is a schematic cross-sectional view of the lens of the present embodiment;
- FIG.3: is an optical path diagram of the lens of the present embodiment;
- FIG.4: is an optical path diagram of the lens of the present embodiment showing also the illumination surface; and
- FIG.5: is a structural diagram of a lamp according to the present embodiment comprising a lens according to the present invention.

### DETAILED DESCRIPTION OF THE INVENTION

Specific embodiments of the present invention will be described in further detail below based on the drawings. It should be understood that the description of the embodiments of the present invention herein is not intended to limit the protection scope of the present invention.

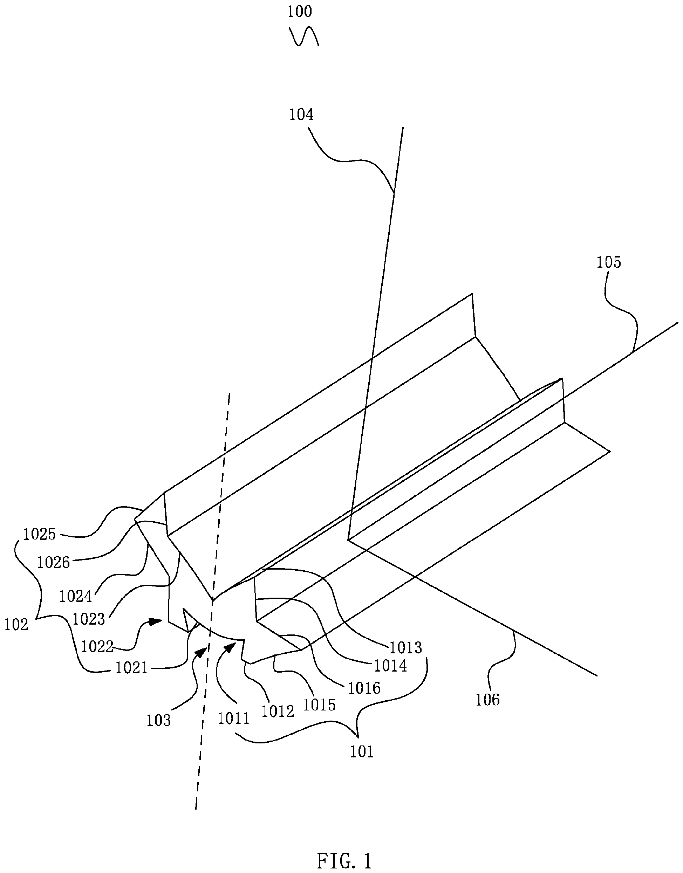

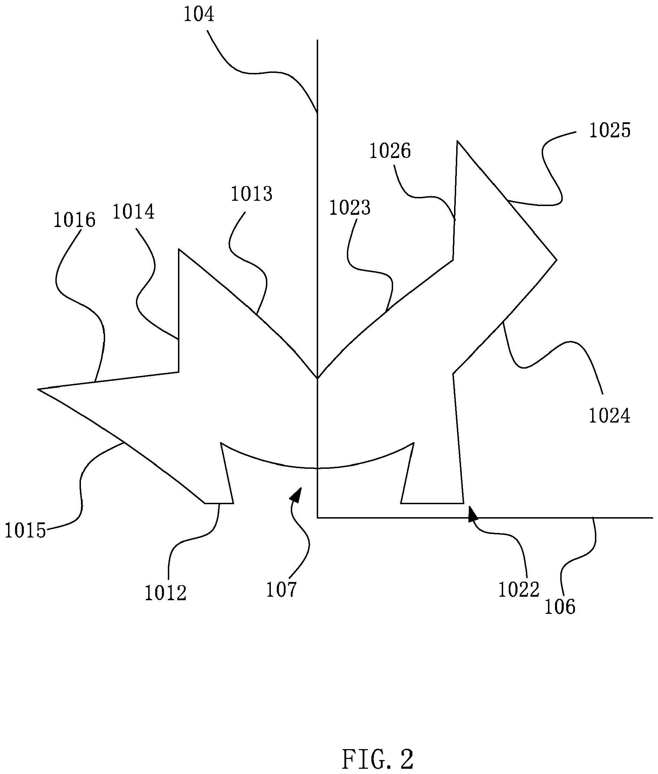

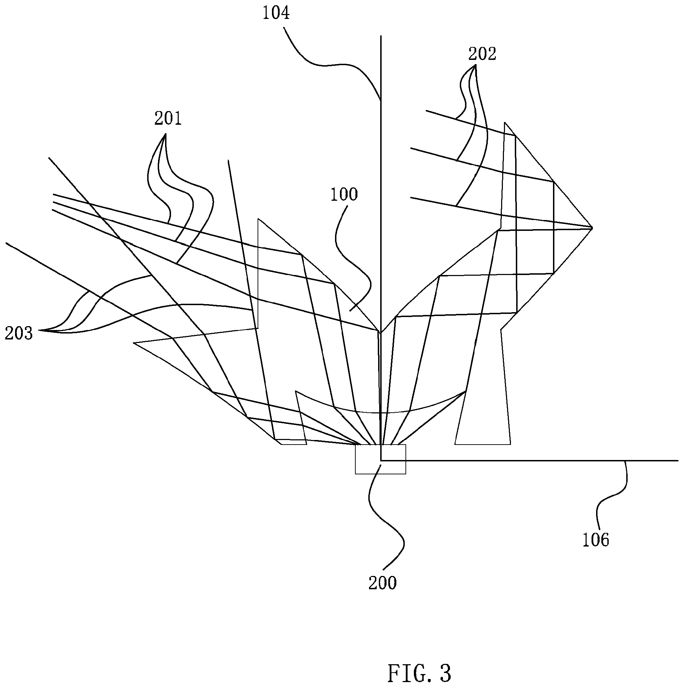

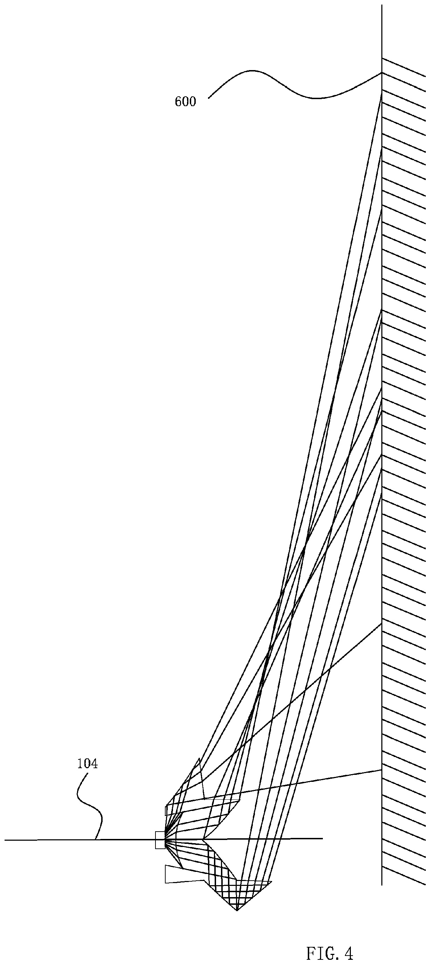

As shown in FIGs. 1 to 4, the lens 100 of the present embodiment includes a light source setting portion 103, a first side portion 101 and a second side portion 102. The lens 100 is used to distribute and properly shape the light intensity distribution if the light emitted from the light source 200, and the light source setting portion 103 refers to the position where the light source 200 is located. The light source 200 may have many types of light distribution, which can be a three-dimensional 360° luminescence, or a single three-dimensional 180° luminescence, or other angles. In order to achieve an efficient and directional lighting, it is more advantageous to use a single three-dimensional 180° luminescence for secondary lighting. Therefore, the light source 200 in this embodiment is a single-sided, three-dimensional luminescence of 180°. At present the most common such light source 200 is an LED chip with a circuit board and its maximum light intensity direction is vertical to the circuit board. For convenience of description, the light source setting portion 103 is defined with a main optical axis 104, a longitudinal axis 105 and a horizontal axis 106 passing through its center and extending perpendicular to each other. In general, the light source 200 has a maximum light intensity direction that coincides with the main optical axis 104.

The lens 100 of the present invention is divided into a first side portion 101 and a second side portion 102, in the plane where the main optical axis 104 and the horizontal axis 106 are located, and on each side of the main optical axis 104, respectively. The light from the light source 200 arranged at the light source setting portion 103 forms a first light beam 201 after modification of the light distribution by means of the first side portion 101, and the reverse extension line of the maximum light intensity direction of the first light beam 201 intersects the main optical axis 104. The first side portion 101 deflects light from the light source 200 on its side in a direction away from the second side portion 102. The specific shape and structure can be configured according to the desired deflection angle and beam angle.

When a high-efficiency single-sided illumination is required, the second side portion 102 deflects light from the light source 200 on its side towards the first side portion 101, and the second side portion 102 includes a first light inlet surface 1021, a first connecting surface 1022, a first total reflection surface 1023, a second total reflection surface 1024, a third total reflection surface 1025 and a first light outlet surface 1026. The first light inlet surface 1021 receives the light beam from the light source 200, and the first connecting surface 1022 is connected to the outer end of the first light inlet surface 1021. The first connecting surface 1022 is used for transition and connection and does not participate in modifying the main lighting distribution, and its shape is related to the shape of other light distribution surfaces. The first total reflection surface 1023 is arranged with an outward tilt relative to the main optical axis 104, and is used (configured) to for total reflection of the incident light from the first light inlet surface 1011 outwardly. The consistency of the light beam from the light source 200 is usually not good enough, and the first total reflection surface 1023 is a curved surface that improves the consistency of the light beam. The second total reflection surface 1024 is inclined outwardly relative to the main optical axis 104, and one end thereof is connected with the free end of the first connecting surface 1022, configured for receiving and total reflection of the reflected light from the first total reflection surface 1023. The third total reflection surface 1025 is inclined inwardly relative to the main optical axis 104, and one end thereof is connected with the free end of the second total reflection surface 1024, and it is configured for total reflection of the reflected light from the second total reflection surface 1024. A part (portion) of the light beam from the light source 200 on the side where the second side portion 102 is located is deflected by the three afore-mentioned total reflection surfaces and finally emitted via the first light outlet surface 1026. The first light outlet surface 1026 is connected to the free end of the first total reflection surface 1023 and the third total reflection surface 1025, and the maximum light intensity direction of the second light beam 202 emitted from the first light outlet surface 1026 intersects with the main optical axis 104.

The light inlet and outlet surfaces of the first side portion 101 are both condenser surfaces and can also realize a deflection of the light beam, but not only uneven and the deflection angle cannot be very large, it is difficult to achieve a large range of lighting. In this embodiment, the first side portion 101 includes a second light inlet surface 1011, a second connecting surface 1012, a fourth total reflection surface 1013, a second light outlet surface 1014, a fifth total reflection surface 1015, and a third light outlet surface 1016. The second connecting surface 1012 is connected with the outer end of the second light inlet surface 1011. Similarly, the second connecting surface 1012 is used for transition and connection, and does not participate in modification of the main light intensity distribution. Its shape is related to the shape of other light distribution surfaces. The fourth total reflection surface 1013 is inclined outwardly relative to the main optical axis 104, and is used for total reflection of the incident light from the second light inlet surface 1021 that is near the main optical axis 104 to the outside. In order to make the light more consistent, more uniform on the irradiation surface, the fourth total reflection surface 1013 is a curved surface to improve the consistency of the light beam. The second light outlet surface 1014 is used for emitting the reflected light from the fourth total reflection surface 1013 to form a first light beam 201. The fifth total reflection surface 1015 is inclined outwardly relative to the main optical axis 104, and one end thereof is connected with the free end of the second connecting surface 1012, and the incident light from the second light inlet surface 1021 that is away from the main optical axis 104 is totally reflected to form a reflected light near the main optical axis 104. A third light outlet surface 1016 is located above the fifth total reflection surface 1015 for emitting the reflected light which is from the fifth total reflection surface 1015 to form a third light beam 203. The first side portion 101 deflects the incident light near the main optical axis 104 outward to obtain the first light beam 201, which is used for large-area illumination, and a large angle deflection can be achieved by the afore-mentioned total reflection. In addition, in order to compensate for the illumination of lens 100 in the direction of main optical axis 104, in this embodiment, incident light from the second light inlet surface 1021 away from the main optical axis 104 is reflected by the fifth total reflection surface 1015.

In order to increase the light efficiency, in the present embodiment, the first light inlet surface 1021 is a light collecting surface. The second light inlet surface 1011 near the main optical axis 104 is a light collecting surface, and the part away from the main optical axis 104 is the side wall of the counter bore 107. The arrangement of the counter bore 107 can improve the light efficiency, which is not described in conventional settings.

In order to improve optical efficiency, in this embodiment, the maximum light intensity directions of the second light beam 202 and the light first beam 201 are parallel or intersect at an angle of less than 5°.

The included angle between the reverse extension line of the maximum light intensity direction of the first light beam 201 and the main optical axis 104 is 60 ° to 80 °.

In order to facilitate manufacturing and light distribution calculation, the first side portion 101 and the second side portion 102 are integrally formed in this embodiment, and the connecting line is located at the main optical axis 104.

With the lens 100 of the present embodiment the illumination surface 600 will receive a wide range of uniform illumination on a single side.

The invention is mainly used for light distribution of line-shaped light source, and the lens 100 is a strip-shaped lens extending along the longitudinal axis 105.

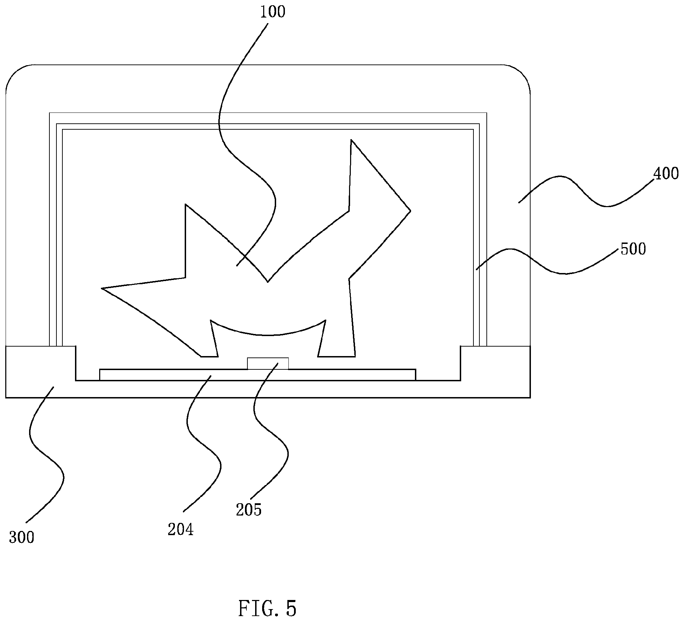

As shown in FIG.5, the lamp in this embodiment includes a lamp holder 300, a lens 100 and a light source 200, and the light source 200 is arranged on (at) the light source setting portion 103. The lamp holder 300 is a strip-shaped lamp holder extending along the longitudinal axis 105, the lens 100 is a strip-shaped lens extending along the longitudinal axis 105, and the light source 200 is a linear light source extending along the longitudinal axis 105. The lamp also comprises a lamp cover 400 arranged on the lamp holder 300 and located above the lens 100. An optical film 500, stretching the light from the light source 200 along the longitudinal axis 105, is arranged between the lens 100 and the lamp cover 400. The light source 200 includes a strip-shaped circuit board 204 extending along the longitudinal axis 105 and a plurality of LED chips 205 arranged on the strip-shaped circuit board 204.

The lamp holder 300 is a strip-shaped lamp holder extending along the longitudinal axis 105, the lens 100 is a strip-shaped lens extending along the longitudinal axis 105, and the light source 200 is a linear light source extending along the longitudinal axis 105. The lamp also comprises a lamp cover 400 arranged on the lamp holder 300 and located above the lens 100. An optical film 500, stretching the light from the light source 200 along the longitudinal axis 105, is arranged between the lens 100 and the lamp cover 400. The light source 200 includes a strip-shaped circuit board 204 extending along the longitudinal axis 105 and a plurality of LED chips 205 arranged on the strip-shaped circuit board 204.

The above are only preferred embodiments of the present invention, and are not used to limit the protection scope of the present invention.

## Claims

1. A lens (100), comprising:
a light source setting portion (103) with a main optical axis (104), a longitudinal axis (105) and a horizontal axis (106) passing through its center and perpendicular to each other; said lens (100) being divided into a first side portion (101) and second side portion (102), in a plane where the main optical axis (104) and the horizontal axis (106) are located, which are disposed on opposite sides of the main optical axis (104), wherein
the first side portion (101) is configured to deflect light from a light source (200) disposed at the light source setting portion (103) and having a maximum light intensity direction that coincides with the main optical axis in a direction away from the second side portion (102) and such that a reverse extension line of the maximum light intensity direction of the first beam (201) after deflection by the first side portion (101) intersects the main optical axis (104);
**characterized in that** the second side portion (102) comprises:
a first light inlet surface (1021);
a first connecting surface (1022), which is connected to an outer end of the first light inlet surface (1021);
a first total reflection surface (1023), being inclined outwardly relative to the main optical axis (104) in a direction extending away from the horizontal axis (106), if viewed in the plane where the main optical axis (104) and the horizontal axis (106) are located, said first total reflection surface (1023) being configured for total reflection of incident light from the first light inlet surface (1011) outwardly;
a second total reflection surface (1024), being inclined outwardly relative to the main optical axis (104) in a direction extending away from the horizontal axis (106), if viewed in the plane where the main optical axis (104) and the horizontal axis (106) are located, a first end of said second total reflection surface (1024) being connected with a free end of the first connecting surface (1022), said second total reflection surface (1024) being configured for receiving and reflecting the reflected light from the first total reflection surface (1023);
a third total reflection surface (1025), being inclined inwardly relative to the main optical axis (104) in a direction extending away from the horizontal axis (106), if viewed in the plane where the main optical axis (104) and the horizontal axis (106) are located, one end of the third total reflection surface (1025) being connected with a second end of the second total reflection surface (1024) opposite to the first end of the second total reflection surface (1024), said third total reflection surface (1025) being configured for total reflection of the reflected light from the second total reflection surface (1024); and
a first light outlet surface (1026), being connected to the free end of the first total reflection surface (1023) and the third total reflection surface (1025), and being configured for emitting the reflected light from the third total reflection surface (1025); wherein
the second light beam (202) emitted from the first light outlet surface (1026) has a maximum light intensity direction intersecting with the main optical axis (104).

2. The lens (100) as claimed in claim 1, wherein the first side portion (101) comprises:
a second light inlet surface (1011);
a second connecting surface (1012), being connected with an outer end of the second light inlet surface (1011);
a fourth total reflection surface (1013), being inclined outwardly relative to the main optical axis (104) in a direction extending away from the horizontal axis (106), if viewed in the plane where the main optical axis (104) and the horizontal axis (106) are located, said fourth total reflection surface (1013) being configured for total reflection of the incident light from a portion of the second light inlet surface (1021) that is near the main optical axis (104) to the outside;
a second light outlet surface (1014), for emitting reflected light from the fourth total reflection surface (1013) to form a first light beam (201);
a fifth total reflection surface (1015), being inclined outwardly relative to the main optical axis (104) in a direction extending away from the horizontal axis (106), if viewed in the plane where the main optical axis (104) and the horizontal axis (106) are located, one end of the fifth total reflection surface (1015) being connected with the free end of the second connecting surface (1012), for total reflection of incident light from the second light inlet surface (1021) away from the main optical axis (104) to form a reflected light close to the main optical axis (104); and
a third light outlet surface (1016), located above the fifth total reflection surface (1015), for emitting reflected light is from the fifth total reflection surface (1015) to form a third beam (203).

3. The lens (100) as claimed in claim 1 or 2, wherein the first light inlet surface (1021) is a light collecting surface.

4. The lens (100) as claimed in any of the preceding claims, wherein at least a portion of the second light inlet surface (1011) near the main optical axis (104) is a light collecting or focusing surface.

5. The lens (100) as claimed in any of the preceding claims, wherein the first total reflection surface (1023) is a curved surface, for improving a consistency of the light beam.

6. The lens (100) as claimed in any of the preceding claims, wherein the fourth total reflection surface (1013) is a curved surface, for improving consistency of the light beam.

7. A lens (100) as claimed in any of the preceding claims, wherein the maximum light intensity directions of the second light beam (202) and the first light beam (201) are parallel or intersect at an angle less than 5°.

8. The lens (100) as claimed in any of claims 1 to 6, wherein the included angle between the reverse extension line of the maximum light intensity direction of the first light beam (201) and the main optical axis (104) is 60 ° to 80 °.

9. The lens (100) as claimed in any of the preceding claims, wherein the first side portion (101) and the second side portion (102) are integrally formed, and the connecting line is located at the main optical axis (104).

10. The lens (100) as claimed in any of the preceding claims, wherein the lens (100) is a strip lens or bar-shaped lens extending along a longitudinal axis (105).

11. A lamp, comprising a lamp holder (300), a lens (100), and a light source (200), **characterized in that** the lens (100) comprises the lens (100) as claimed in any of claims 1 to 10, wherein the light source (200) is arranged on or at the light source setting portion (103).

12. The lamp as claimed in claim 11, wherein
the lamp holder (300) is a strip-shaped lamp holder extending along the longitudinal axis (105),
the lens (100) is a strip-shaped lens extending along the longitudinal axis (105), and
the light source (200) is a linear source extending along the longitudinal axis (105).

13. The lamp as claimed in claim 11 or 12, wherein the lamp further comprises a lamp cover (400) arranged on the lamp holder (300) and located above the lens (100).

14. The lamp as claimed in any of claims 11 to 13, wherein an optical film (500) for stretching the light from the light source (200) along the longitudinal axis (105) is disposed between the lens (100) and the lamp cover (400).

## Patentansprüche

1. Linse (100), umfassend:
einen Lichtquellen-Aufnahmeabschnitt (103) mit einer optischen Hauptachse (104), einer Längsachse (105) und einer horizontalen Achse (106), die durch dessen Mitte und senkrecht zueinander verlaufen; wobei die Linse (100) in einen ersten seitlichen Abschnitt (101) und einen zweiten seitlichen Abschnitt (102) in einer Ebene, in der sich die optische Hauptachse (104) und die horizontale Achse (106) befinden, unterteilt ist, wobei diese auf einander gegenüberliegenden Seiten der optischen Hauptachse (104) angeordnet sind, wobei
der erste seitliche Abschnitt (101) so konfiguriert ist, dass er Licht von einer Lichtquelle (200) ablenkt, die an dem Lichtquellen-Aufnahmeabschnitt (103) angeordnet ist und eine Richtung maximaler Lichtintensität aufweist, die mit der optischen Hauptachse in einer Richtung wegwärts von dem zweiten seitlichen Abschnitt (102) gerichtet zusammenfällt, und so, dass eine Verlängerungslinie in einer Richtung entgegengesetzt zu der Richtung maximaler Lichtintensität des ersten Strahls (201) nach einer Strahlablenkung durch den ersten seitlichen Abschnitt (101) die optische Hauptachse (104) schneidet;
**dadurch gekennzeichnet, dass** der zweite seitliche Abschnitt (102) umfasst:
eine erste Lichteintrittsfläche (1021);
eine erste Verbindungsfläche (1022), die mit einem äußeren Ende der ersten Lichteintrittsfläche (1021) verbunden ist;
eine erste Totalreflexionsfläche (1023), die nach außen relativ zu der optischen Hauptachse (104) in einer Richtung geneigt ist, die sich von der horizontalen Achse (106) wegwärts erstreckt, wenn diese in der Ebene betrachtet wird, in der sich die optische Hauptachse (104) und die horizontale Achse (106) befinden, wobei die erste Totalreflexionsfläche (1023) für eine Totalreflexion von einfallendem Licht von der ersten Lichteintrittsfläche (1011) nach außen konfiguriert ist;
eine zweite Totalreflexionsfläche (1024), die relativ zu der optischen Hauptachse (104) in einer Richtung nach außen geneigt ist, die sich von der horizontalen Achse (106) wegwärts erstreckt, wenn diese in der Ebene betrachtet wird, in der sich die optische Hauptachse (104) und die horizontale Achse (106) befinden sind, wobei ein erstes Ende der zweiten Totalreflexionsfläche (1024) mit einem freien Ende der ersten Verbindungsfläche (1022) verbunden ist, wobei die zweite Totalreflexionsfläche (1024) so konfiguriert ist, dass diese das von der ersten Totalreflexionsfläche (1023) reflektierte Licht empfängt und reflektiert;
eine dritte Totalreflexionsfläche (1025), die relativ zu der optischen Hauptachse (104) in einer Richtung nach innen geneigt ist, die sich von der horizontalen Achse (106) wegwärts erstreckt, wenn diese in der Ebene betrachtet wird, in der sich die optische Hauptachse (104) und die horizontale Achse (106) befinden, wobei ein Ende der dritten Totalreflexionsfläche (1025) mit einem zweiten Ende der zweiten Totalreflexionsfläche (1024) verbunden ist, das dem ersten Ende der zweiten Totalreflexionsfläche (1024) gegenüberliegt, wobei die dritte Totalreflexionsfläche (1025) für eine Totalreflexion des von der zweiten Totalreflexionsfläche (1024) reflektierten Lichts konfiguriert ist; und
eine erste Lichtaustrittsfläche (1026), die mit dem freien Ende der ersten Totalreflexionsfläche (1023) und der dritten Totalreflexionsfläche (1025) verbunden ist und zum Abstrahlen des reflektierten Lichts von der dritten Totalreflexionsfläche (1025) konfiguriert ist; wobei
der zweite Lichtstrahl (202), der von der ersten Lichtaustrittsfläche (1026) abgestrahlt wird, eine Richtung maximaler Lichtintensität aufweist, die sich mit der optischen Hauptachse (104) schneidet.

2. Linse (100) nach Anspruch 1, wobei der erste seitliche Abschnitt (101) umfasst:
eine zweite Lichteintrittsfläche (1011);
eine zweite Verbindungsfläche (1012), die mit einem äußeren Ende der zweiten Lichteintrittsfläche (1011) verbunden ist;
eine vierte Totalreflexionsfläche (1013), die nach außen relativ zur optischen Hauptachse (104) in einer Richtung geneigt ist, die sich von der horizontalen Achse (106) wegwärts erstreckt, wenn diese in der Ebene betrachtet wird, in der sich die optische Hauptachse (104) und die horizontale Achse (106) befinden, wobei die vierte Totalreflexionsfläche (1013) für eine Totalreflexion des einfallenden Lichts von einem Abschnitt der zweiten Lichteintrittsfläche (1021), der sich nahe der optischen Hauptachse (104) befindet, nach außen konfiguriert ist;
eine zweite Lichtaustrittsfläche (1014) zum Abstrahlen von reflektiertem Licht von der vierten Totalreflexionsfläche (1013), um einen ersten Lichtstrahl (201) zu bilden;
eine fünfte Totalreflexionsfläche (1015), die relativ zu der optischen Hauptachse (104) nach außen in einer Richtung geneigt ist, die sich von der horizontalen Achse (106) wegwärts erstreckt, wenn diese in der Ebene betrachtet wird, in der sich die optische Hauptachse (104) und die horizontale Achse (106) befinden, wobei ein Ende der fünften Totalreflexionsfläche (1015) mit dem freien Ende der zweiten Verbindungsfläche (1012) verbunden ist, um einfallendes Licht von der zweiten Lichteintrittsfläche (1021) weg von der optischen Hauptachse (104) total zu reflektieren, um ein reflektiertes Licht nahe der optischen Hauptachse (104) zu bilden; und
eine dritte Lichtaustrittsfläche (1016), die sich oberhalb der fünften Totalreflexionsfläche (1015) befindet, um reflektiertes Licht von der fünften Totalreflexionsfläche (1015) abzustrahlen, um einen dritten Strahl (203) zu bilden.

3. Linse (100) nach Anspruch 1 oder 2, wobei die erste Lichteintrittsfläche (1021) eine Lichtsammelfläche ist.

4. Linse (100) nach einem der vorhergehenden Ansprüche, wobei zumindest ein Teil der zweiten Lichteintrittsfläche (1011) in der Nähe der optischen Hauptachse (104) eine Lichtsammel- oder Lichtfokussierfläche ist.

5. Linse (100) nach einem der vorhergehenden Ansprüche, wobei die erste Totalreflexionsfläche (1023) eine gekrümmte Fläche ist, um die Homogenität des Lichtstrahls zu verbessern.

6. Linse (100) nach einem der vorangehenden Ansprüche, wobei die vierte Totalreflexionsfläche (1013) eine gekrümmte Fläche ist, um die Homogenität des Lichtstrahls zu verbessern.

7. Linse (100) nach einem der vorhergehenden Ansprüche, wobei die Richtungen der maximalen Lichtintensität des zweiten Lichtstrahls (202) und des ersten Lichtstrahls (201) parallel sind oder sich unter einem Winkel von weniger als 5° schneiden.

8. Linse (100) nach einem der Ansprüche 1 bis 6, wobei der eingeschlossene Winkel zwischen der Verlängerungslinie des ersten Lichtstrahls (201), die sich entgegengesetzt zu der Richtung der maximalen Lichtstärke erstreckt, und der optischen Hauptachse (104) 60° bis 80° beträgt.

9. Linse (100) nach einem der vorhergehenden Ansprüche, wobei der erste seitliche Abschnitt (101) und der zweite seitliche Abschnitt (102) einstückig ausgebildet sind und die Verbindungslinie auf der optischen Hauptachse (104) liegt.

10. Linse (100) nach einem der vorangehenden Ansprüche, wobei die Linse (100) eine streifen- oder stabförmige Linse ist, die sich entlang einer Längsachse (105) erstreckt.

11. Leuchte, mit einer Lampenfassung (300), einer Linse (100) und einer Lichtquelle (200), **dadurch gekennzeichnet, dass** die Linse (100) die Linse (100) nach einem der Ansprüche 1 bis 10 umfasst, wobei die Lichtquelle (200) auf oder bei dem Lichtquellen-Aufnahmeabschnitt (103) angeordnet ist.

12. Leuchte nach Anspruch 11, wobei
die Lampenfassung (300) eine streifen bzw. stabförmige Lampenfassung ist, die sich entlang der Längsachse (105) erstreckt,
die Linse (100) eine streifen bzw. stabförmige Linse ist, die sich entlang der Längsachse (105) erstreckt, und
die Lichtquelle (200) eine lineare Quelle ist, die sich entlang der Längsachse (105) erstreckt.

13. Leuchte nach Anspruch 11 oder 12, wobei die Leuchte ferner eine Lampenabdeckung (400) umfasst, die an der Lampenfassung (300) angeordnet ist und sich oberhalb der Linse (100) befindet.

14. Leuchte nach einem der Ansprüche 11 bis 13, wobei zwischen der Linse (100) und der Lampenabdeckung (400) eine optische Folie (500) zur Streckung des Lichts der Lichtquelle (200) entlang der Längsachse (105) angeordnet ist.

## Revendications

1. Une lentille (100) comprenant
une partie de positionnement d'une source lumineuse (103) avec un axe optique principal (104), un axe longitudinal (105) et un axe horizontal (106) passant par son centre et perpendiculaires l'un à l'autre ; ladite lentille (100) est divisée en une première partie latérale (101) et une deuxième partie latérale (102), dans un plan où l'axe optique principal (104) et l'axe horizontal (106) sont situés, qui sont disposées sur des côtés opposés de l'axe optique principal (104), dans laquelle
la première partie latérale (101) est configurée pour dévier la lumière provenant d'une source lumineuse (200) disposée sur la partie de positionnement de la source lumineuse (103) et ayant une direction d'intensité lumineuse maximale qui coïncide avec l'axe optique principal dans une direction opposée à la deuxième partie latérale (102) et de telle sorte qu'une ligne d'extension inverse de la direction d'intensité lumineuse maximale du premier faisceau (201) après déviation par la première partie latérale (101) croise l'axe optique principal (104) ;
**caractérisée par le fait que** la deuxième partie latérale (102) comprend :
une première surface d'entrée de lumière (1021) ;
une première surface de connexion (1022), qui est reliée à une extrémité extérieure de la première surface d'entrée de lumière (1021) ;
une première surface de réflexion totale (1023), inclinée vers l'extérieur par rapport à l'axe optique principal (104) dans une direction s'étendant à l'écart de l'axe horizontal (106), vue dans le plan où l'axe optique principal (104) et l'axe horizontal (106) sont situés, ladite première surface de réflexion totale (1023) étant configurée pour une réflexion totale de la lumière incidente provenant de la première surface d'entrée de lumière (1011) vers l'extérieur ;
une deuxième surface de réflexion totale (1024), inclinée vers l'extérieur par rapport à l'axe optique principal (104) dans une direction s'étendant à l'écart de l'axe horizontal (106), vue dans le plan où l'axe optique principal (104) et l'axe horizontal (106) sont situés, une première extrémité de ladite deuxième surface de réflexion totale (1024) étant reliée à une extrémité libre de la première surface de connexion (1022), ladite deuxième surface de réflexion totale (1024) étant configurée pour recevoir et réfléchir la lumière réfléchie par la première surface de réflexion totale (1023) ;
une troisième surface de réflexion totale (1025), inclinée vers l'intérieur par rapport à l'axe optique principal (104) dans une direction s'étendant à l'écart l'axe horizontal (106), vue dans le plan où l'axe optique principal (104) et l'axe horizontal (106) sont situés, une extrémité de la troisième surface de réflexion totale (1025) étant reliée à une deuxième extrémité de la deuxième surface de réflexion totale (1024) opposée à la première extrémité de la deuxième surface de réflexion totale (1024), ladite troisième surface de réflexion totale (1025) étant configurée pour une réflexion totale de la lumière réfléchie par la deuxième surface de réflexion totale (1024) ; et
une première surface de sortie de la lumière (1026), reliée à l'extrémité libre de la première surface de réflexion totale (1023) et de la troisième surface de réflexion totale (1025), et configurée pour émettre la lumière réfléchie par la troisième surface de réflexion totale (1025) ; dans laquelle
le deuxième faisceau lumineux (202) émis par la première surface de sortie de la lumière (1026) a une direction d'intensité lumineuse maximale coupant l'axe optique principal (104).

2. La lentille (100) selon la revendication 1, dans laquelle la première partie latérale (101) comprend :
une deuxième surface d'entrée de lumière (1011) ;
une deuxième surface de connexion (1012), reliée à une extrémité extérieure de la deuxième surface d'entrée de lumière (1011) ;
une quatrième surface de réflexion totale (1013), inclinée vers l'extérieur par rapport à l'axe optique principal (104) dans une direction s'étendant à l'écart l'axe horizontal (106), vue dans le plan où l'axe optique principal (104) et l'axe horizontal (106) sont situés, ladite quatrième surface de réflexion totale (1013) étant configurée pour une réflexion totale de la lumière incidente à partir d'une partie de la deuxième surface d'entrée de lumière (1021) qui est proche de l'axe optique principal (104) vers l'extérieur;
une deuxième surface de sortie de la lumière (1014), pour émettre la lumière réfléchie par la quatrième surface de réflexion totale (1013) afin de former un premier faisceau de lumière (201) ;
une cinquième surface de réflexion totale (1015), inclinée vers l'extérieur par rapport à l'axe optique principal (104) dans une direction s'étendant à l'écart l'axe horizontal (106), vue dans le plan où l'axe optique principal (104) et l'axe horizontal (106) sont situés, une extrémité de la cinquième surface de réflexion totale (1015) étant reliée à l'extrémité libre de la deuxième surface de connexion (1012), pour une réflexion totale de la lumière incidente provenant de la deuxième surface d'entrée de lumière (1021) loin de l'axe optique principal (104) pour former une lumière réfléchie proche de l'axe optique principal (104) ; et
une troisième surface de sortie de la lumière (1016), située au-dessus de la cinquième surface de réflexion totale (1015), pour émettre la lumière réfléchie à partir de la cinquième surface de réflexion totale (1015) afin de former un troisième faisceau (203).

3. La lentille (100) selon la revendication 1 ou 2, dans laquelle la première surface d'entrée de lumière (1021) est une surface de collecte de lumière.

4. La lentille (100) selon l'une quelconque des revendications précédentes, dans laquelle au moins une partie de la deuxième surface d'entrée de lumière (1011) à proximité de l'axe optique principal (104) est une surface de collecte ou de focalisation de la lumière.

5. La lentille (100) selon l'une quelconque des revendications précédentes, dans laquelle la première surface de réflexion totale (1023) est une surface courbe, pour améliorer une régularité du faisceau lumineux.

6. La lentille (100) selon l'une quelconque des revendications précédentes, dans laquelle la quatrième surface de réflexion totale (1013) est une surface incurvée, pour améliorer une régularité du faisceau lumineux.

7. La lentille (100) selon l'une quelconque des revendications précédentes, dans laquelle les directions d'intensité lumineuse maximale du deuxième faisceau lumineux (202) et du premier faisceau lumineux (201) sont parallèles ou se croisent selon un angle inférieur à 5°.

8. La lentille (100) selon l'une quelconque des revendications 1 à 6, dans laquelle l'angle inclus entre la ligne d'extension inverse de la direction d'intensité lumineuse maximale du premier faisceau lumineux (201) et l'axe optique principal (104) est compris entre 60 ° et 80 °.

9. La lentille (100) selon l'une quelconque des revendications précédentes, dans laquelle la première partie latérale (101) et la deuxième partie latérale (102) sont formées d'un seul tenant, et la ligne de liaison est située au niveau de l'axe optique principal (104).

10. La lentille (100) selon l'une quelconque des revendications précédentes, dans laquelle la lentille (100) est une lentille en forme de bande ou de barre s'étendant le long d'un axe longitudinal (105).

11. Une lampe, comprenant un support de lampe (300), une lentille (100) et une source lumineuse (200), **caractérisée en ce que** la lentille (100) comprend la lentille (100) selon l'une quelconque des revendications 1 à 10, la source lumineuse (200) étant disposée sur ou au niveau de la partie de positionnement de la source lumineuse (103).

12. La lampe selon la revendication 11, dans laquelle
le support de lampe (300) est un support de lampe en forme de bande s'étendant le long de l'axe longitudinal (105),
la lentille (100) est une lentille en forme de bande s'étendant le long de l'axe longitudinal (105), et
la source lumineuse (200) est une source linéaire s'étendant le long de l'axe longitudinal (105).

13. La lampe selon la revendication 11 ou 12, dans laquelle la lampe comprend en outre un couvercle de lampe (400) disposé sur le support de lampe (300) et situé au-dessus de la lentille (100).

14. La lampe selon l'une quelconque des revendications 11 à 13, dans laquelle un film optique (500) destiné à allonger la lumière provenant de la source lumineuse (200) le long de l'axe longitudinal (105) est disposé entre la lentille (100) et le couvercle de la lampe (400).
